# EUROPÄISCHE PATENTSCHRIFT

(11) **EP 1 380 522 B1**
(45) Veröffentlichungstag und Bekanntmachung des Hinweises auf die Patenterteilung: **30.08.2006**
(21) Anmeldenummer: 03011585.1
(22) Anmeldetag: 22.05.2003
(51) Int. Cl.: B65G 47/51

(54) **Niederdruck Speichertisch für Gefässe u. dgl**
Low-pressure accumulation table for containers or the like
Plateau d'accumulation à basse pression pour conteneurs ou analogue

(30) Priorität: 05.07.2002 DE 10230335
(43) Veröffentlichungstag der Anmeldung: 14.01.2004
(73) Patentinhaber: KHS AG, 44143 Dortmund (DE)
(72) Erfinder: Backhaus, Martin, 44143 Dortmund (DE); Mundt, Georg, 59174 Kamen (DE); Smusch, Günther, 59368 Werne (DE); Stienen, Thomas, 59425 Unna (DE)

(56) Entgegenhaltungen:
- EP-A- 0 826 614
- WO-A-00/41955
- DE-A- 2 504 264
- DE-A- 2 745 640
- DE-A- 10 015 566
- GB-A- 2 327 929

## Beschreibung

Die einzelnen Produktionsmaschinen innerhalb einer Gesamtanlage der Getränkeindustrie werden, zum Transport der zu behandelnden Behälter, in der Regel durch Behältertransportanlagen verbunden.

Diese Behältertransportanlagen bestehen nicht nur aus den eigentlichen Transportkomponenten, welche im wesentlichen nur den Transport der Behälter von einer Behandlungsmaschine zur nächsten übernehmen, sondern auch aus Komponenten mit weiterreichenden Aufgaben.

Zu diesem Komponenten gehören Anlagenbauteile zur Speicherung von Behältern. Diese Komponenten werden in der Praxis Speicher oder aber auch Speichertische genannt.

Die Hauptaufgabe dieser Speichertische besteht darin, den Produktionsablauf auch dann störungsfrei aufrecht zu erhalten, wenn aufeinanderfolgende Behandlungsmaschinen stark schwankende oder unterschiedliche Arbeitsgeschwindigkeiten aufweisen.

Eine weitere Aufgabe besteht darin, durch den innerhalb der Speichertische gespeicherten Vorrat an Behältern, kurzfristige Unterbrechungen des von den vorgelagerten Behandlungsmaschinen kommenden Behälterstromes zu kompensieren und eine kontinuierliche Versorgung der nachgelagerten Behandlungsmaschinen zu gewährleisten.

Im Laufe der Zeit wurden zahlreiche Vorschläge zur optimalen Gestaltung derartiger Speichertische vorgestellt. Dabei ist zunächst eine Unterteilung nach dem Arbeits- bzw. Speicherprinzip vorzunehmen.

Zum einen unterscheidet man Speichertische, welche die zuerst aufgenommenen Behälter als letzte wieder in den Produktionsablauf zurückgeben. Derartige Speichertische werden im allgemeinen als FILO-Speicher (First in, Last out) bezeichnet. Zum anderen unterscheidet man Speichertische, welche die zuerst aufgenommenen Behälter als erste wieder in den Produktionsablauf zurückgeben. Solche Speichertische werden als FIFO-Speicher (First in, First out) bezeichnet.

FILO-Speichern haftet der Nachteil an, dass sie für Produkte, bei denen die Produktqualität von der Dauer der Verarbeitung incl. Transport- und Wartezeiten abhängig ist, nur bedingt geeignet sind. Zur Vermeidung unzulässig langer Verweilzeiten der Behälter ist es somit - auch im laufenden Betrieb einer Anlage - regelmäßig erforderlich, sämtliche FILO-Speicher zu leeren, wodurch sich zum einen ein erhöhter Steuerungsaufwand ergibt und zum anderen die Prozessführung der Gesamtanlage unnötig erschwert wird.

Da den FIFO-Speichern die oben beschriebenen Nachteile nicht anhaften, werden derartige Speichersysteme in der Getränke- bzw. Lebensmittelindustrie bevorzugt eingesetzt.

Eine mögliche Bauform von FIFO-Speichertischen stellt die in der US 5.282.525 vorgestellte Ausführung dar. Die in dieser Schrift dargestellte Variante arbeitet mit nur einen Transportband, Ein- und Auslauf des Speichertisches sind an gegenüberliegenden Seiten des Speichertisches angeordnet, wobei die jeweilige Breite von Ein-und Auslauf, im Vergleich zur Breite des Speichertisches, klein ist.

Auf der Auslaufseite ist eine schräg zum Behälterstrom ausgerichtete Führung angeordnet, welche die Behälter zum Auslauf leitet. Da die Vorrichtung nur mit einem Transportband arbeit, ist dieses entsprechend breit ausgebildet und deckt die gesamte Breite des Speichertisches ab. In der Praxis ist dieses Transportband als Gurt ausgebildet. Konstruktionsbedingt muss dieses Transportband, um einen stetigen Behälterfluss zu gewährleisten, ständig angetrieben werden. Dieses hat zur Folge, dass sich aufgrund der unvermeidlich zwischen Behälter und Transportband auftretenden Reibungskräfte ein permanenter Staudruck zwischen den Behältern aufbaut. Übersteigt dieser Staudruck ein gewisses Maß, so können insbesondere bei schon etikettierten oder lackierten Behältern Beschädigungen auftreten, was in der Praxis unverwünscht ist.

Da die auftretenden Staudruckkräfte bei derartigen Vorrichtungen mit der Anzahl der gespeicherten Behälter steigen, sind maximale Baugröße und somit auch die Speicherkapazität stark begrenzt. Dieses stellt einen weiteren gravierenden Nachteil derartiger Vorrichtungen dar.

Ebenfalls bekannt geworden ist eine Vorrichtung nach US 3.650.371.
Bei dieser Vorrichtung sind Einlauf- und Auslauftransporteur mit Abstand zueinander parallel, aber auf unterschiedlichem Höhenniveau angeordnet, wobei sich der Auslauftransporteur unterhalb des Einlauftransporteurs befindet. Zwischen beiden Transporteuren sind mehrere Tische angeordnet. Diese Tische weisen ein Gefälle in Richtung des Auslauftransporteurs auf.

Die Behälter werden vom Einlauftransporteur geradlinig bis zum Ende des Speichertisches transportiert. Dort stoßen die Behälter entweder auf eine Führung, die sie zum Auslauftransporteur leiten soll, oder aber auf weitere Behälter, welche im Speichertisch zwischengespeichert werden. Um vom Einlauftransporteur zum Auslauftransporteur zu gelangen, müssen die Behälter die zwischen diesen beiden angeordneten Tische überqueren. Da es sich bei diesen Tischen im wesentlichen um Bauteile ohne Antriebsvorrichtungen für die Behälter handelt, kann die Überquerung der Tische nur anhand des Staudruckes der Behälter untereinander erfolgen. Wie bereits oben dargestellt ist eine im wesentlichen auf dem Staudruck basierende Behälterbewegung nicht erwünscht.
Die in der US 3.650.371 zur Verminderung des Staudruckes vorgeschlagene Schrägstellung der Tische kann durch die sich damit zwangsläufig ergebenden Kippkanten und die in der Praxis nicht erwünschten Niveauunterschiede zwischen Ein- und Auslauftransporteur nicht überzeugen. Auch der ebenfalls für die Tische vorgeschlagene Vibrationsantrieb überzeugt in der Praxis aufgrund der erhöhten Kippgefahr für die Behälter und den damit verbundenen Betriebsstörungen nicht. Als weiterer Nachteil einer derartigen Vorrichtung ist anzusehen, dass ein vollständiges, automatisches Leerfahren des Speichers nur bedingt möglich ist. Auch bietet diese Vorrichtung nur geringe Steuer- und Regelungsmöglichkeiten für den Behälterstrom und das Speicherverhalten.

Vorgeschlagen wurde auch eine Vorrichtung nach US 4.401.207. Prägendes Merkmal dieser Vorrichtung ist, dass Ein- und Auslauftransporteur von einem durch den gesamten Speichertisch laufenden Transportband gebildet werden. Beidseitig dieses durchlaufenden Transportbandes ist jeweils mindestens ein weiteres Transportband angeordnet, wobei die Bänder einer Seite in Richtung des durchlaufenden Transportbandes angetrieben werden, und die Bänder der anderen Seite in entgegengesetzter Richtung. Über den Transportbändern, welche in Richtung von Ein- oder Auslauf des Speichertisches fördern, sind kurz vor dem Ein- bzw. Auslauf Führungen so angeordnet, dass die in diese Richtung geförderten Behälter wieder auf das durchlaufende Ein- und Auslauftransporteurband geleitet werden.

Werden bei dieser Vorrichtung nicht alle zugeführten Behälter von dem auf den Auslauf folgenden Transporteur abgenommen, so stauen sich diese Behälter zunächst im Bereich des Auslaufes. Dort werden sie dann durch den Staudruck der Behälter untereinander auf die in Richtung des Einlaufs fördernden Bänder geschoben und von diesen abtransportiert. Im Bereich des Einlaufes treffen diese zurückgeförderten Behälter dann auf die neu zugeführten Behälter. Auch an dieser Stelle baut sich durch das Aneinanderstoßen der Behälter ein entsprechender Staudruck auf, so dass die Behälter auch auf die zusätzlichen, in Richtung des Auslaufs fördernden Transportbänder geschoben werden. Durch diese Mechanismen baut sich bei ungenügender Behälterabnahme auf dem Speichertisch ein ständig zwischen Ein- und Auslauf kreisender Bestand an Behältern auf.

Von großem Nachteil ist es dabei, dass die zahlreichen Überschubbewegungen hauptsächlich durch den Staudruck zwischen den Behältern verursacht werden.

Als weitere wesentliche Nachteile sind zu nennen:
- die erhöhte Kippgefahr für die Behälter, da zwei in unterschiedliche Richtungen laufende Transportbänder direkt nebeneinander angeordnet sind, wodurch sich die Behälter mit hoher Relativgeschwindigkeit aneinander vorbei bewegen,
- eine schlechte Ausnutzung der Fläche des Speichers, da sich die Behälter während der Speicherung überwiegend an den Rändern des Speichers anordnen,
- die beim Leerfahren des Speichers auftretenden Unterbrechungen des Behälterstromes, da die Behälter über die gesamte Fläche des Speichers kreisen.

Ebenfalls stellen sich die Steuer- und Regelungsmöglichkeiten des Speichers als ungenügend heraus, da eine Möglichkeit zur Anpassung oder Veränderung von Geschwindigkeit und/oder Förderrichtung der Transportbänder nicht vorgesehen ist.

Des weiteren wurde auch eine Vorrichtung nach WO 00/41955 vorgestellt.
Bei dieser Vorrichtung wird die Oberfläche des Speichertisches aus einer Vielzahl von Transportbändern gebildet. Dabei werden sogenannte Förder- und Speicherbänder unterschieden. Diese sind abwechselnd nebeneinanderliegend angeordnet. Dabei können sowohl Förder-, als auch Transportbänder in Stückzahlen größer Eins vorgesehen sein. Es ist in der WO 00/41955 weiterhin vorgesehen, dass alle Förderbänder mit einer ersten Geschwindigkeit und alle Speicherbänder mit einer zweiten Geschwindigkeit bewegt werden, wobei die Geschwindigkeit der Förderbänder die Führungsgröße sein soll, und die Geschwindigkeit der Speicherbänder eine variable Geschwindigkeit sein soll, welche aber stets kleiner ist als die der Förderbänder. Während des normalen Betriebsablaufes werden die Behälter durch ein in den Speichertisch hineinführendes Förderband auf den Speichertisch aufgebracht. Werden nun, durch den ebenfalls vorgesehenen Auslauftransporteur, Behälter nicht in der erforderlichen Menge abgenommen, so
werden die überzähligen Behälter, durch den sich aufbauenden Staudruck, von den Förderbändern auf die Speicherbänder geschoben. Während des Einspeicherns von Behältern stehen die Speicherbänder erfindungsgemäß still. Dieser Stillstand der Speicherbänder stellt einen großen Nachteil einer derartigen Vorrichtung dar, da die zu speichernden Behälter beim Übergang von den Förderbändern auf die Speicherbänder stark verzögert werden, wodurch es insbesondere bei Behältern mit vergleichsweise hoher Schwerpunktlage und geringer Grundfläche häufig zu unerwünschtem Kippen und zum Umfallen der Behälter kommen kann.

Ebenfalls bekannt wurde die DE 25 04 264, welche eine Speichervorrichtung für aufrechtstehend geförderte Behälter zum Gegenstand hat.

Bei dieser Speichervorrichtung sind drei Bandtypen vorgesehen, welche jeweils mit einer eigenen Geschwindigkeit antreibbar sind. Eine vorgesehene Steuervorrichtung schaltet, in Abhängigkeit vom Schaltzustand angeordneter Stauschalter, die eigentliche Speicherförderbahn lediglich an oder aus, eine variable Veränderung der Bandgeschwindigkeit ist nicht vorgesehen.

Für die beiden weiteren Bandtypen ist für alle denkbaren Betriebszustände lediglich der kontinuierliche Betrieb vorgesehen.

Dadurch, dass die gesamte Speicherfläche nur aus Förderbändern einer Bandart besteht, und dass die Geschwindigkeit der Speicherförderbahn nur die Betriebszustände V=0 und V=max annehmen kann, ist es mit einer derartigen Ausgestaltung nicht möglich, ein hinsichtlich Leistung der Gesamtanlage und Schonung des Behältermaterial optimales Speicherverhalten zu realisieren.

Einen weiteren bedeutenden Nachteil stellt die hohe Relativgeschwindigkeit zwischen den im Normalfall still stehenden Speicherbändern und den mit einer bestimmten Geschwindigkeit laufenden Förderbändern dar. Dadurch, dass beide Bandtypen mit Behältern beaufschlagt sind, werden diese Behälter mit der sich ergebenden Relativgeschwindigkeit aneinander vorbeigeführt. Der sich innerhalb der Behältermenge ausbildende Staudruck bedingt, dass sich auch die auf unterschiedlichen Bändern stehenden Behälter berühren, wodurch es zu einer unerwünschten, erheblichen Lärmentwicklung kommt. Darüber hinaus führen die fortlaufenden Berührungen der Behälter untereinander auf Dauer zu Beschädigungen und zu einem erhöhten Verschleiß des Behältermaterials, was ebenfalls unerwünscht ist.

Einen weiteren Nachteil einer derartigen Vorrichtung besteht darin, dass die Regelungs- und Steuerungsmöglichkeiten dadurch stark eingeschränkt sind, dass die beiderseits der Förderbänder angeordneten Speicherbänder ausschließlich mit der selben Geschwindigkeit angetrieben werden können. Insbesondere bei Speichertischen, bei denen der Auslauf nicht mittig, sondern seitlich am Speichertisch angeordnet ist, machen sich die Nachteile dieser eingeschränkten Regelungsfähigkeit besonders deutlich bemerkbar, da ein gezieltes und besonders schonendes Zuführen der Behälter zum Auslauf des Speichertisches nicht möglich ist.

Zum Entspeichern von Behältern ist vorgesehen, dass die Speicherbänder mit einer Geschwindigkeit, welche kleiner ist als die Geschwindigkeit der Förderbänder, angetrieben werden.

Aufgabe und Ziel der vorliegenden Erfindung ist es, einen drucklosen FIFO-Speichertisch zu schaffen, der die oben dargestellten Nachteile vermeidet und insbesondere hinsichtlich des Regelverhaltens des Speichertisches eine Verbesserung darstellt. Dazu ist vorgesehen, dass neben den bereits bekannten Förder- und Speicherbändern eine weitere, mit einer eigenen Geschwindigkeit angetriebene Bandart eingeführt wird, wobei diese neue Bandart an einer Seite eines Förderbandes und die Speicherbänder an der anderen Seite eines Förderbandes angeordnet werden.

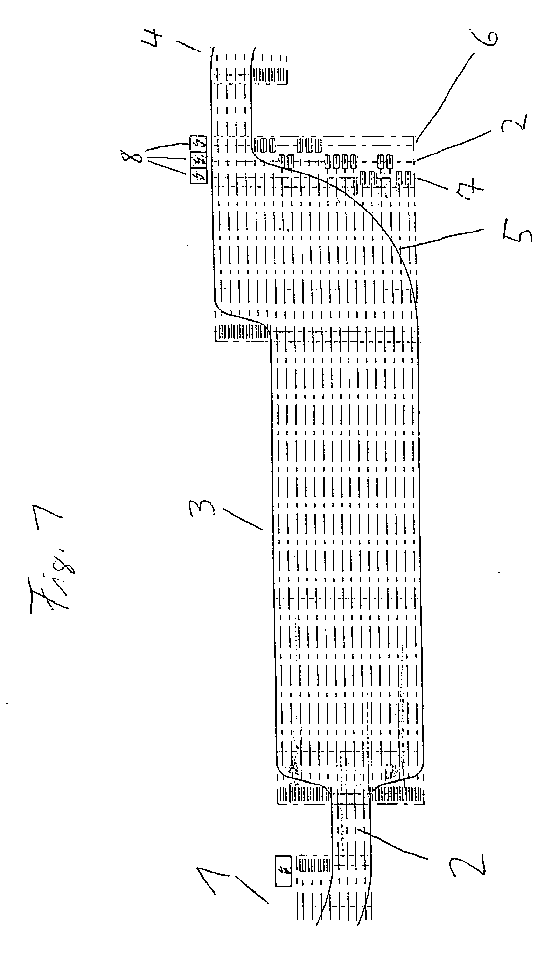

Im Nachfolgenden wird die vorliegende Erfindung anhand eines Ausführungsbeispieles näher erläutert. Im Einzelnen zeigt Figur 1: die Draufsicht eines erfindungsgemäßen Puffertisches

Ausgehend von dem bekannten Stand der Technik weist auch der hier vorgestellte drucklose Speichertisch mindestens einen Einlauftransporteur 1 auf. Im Anschluss an diesen Einlauftransporteur 1 werden die Behälter durch ein oder mehrere Zuführbänder 2 an einem Ende des Speichertisches 3 auf diesen aufgebracht. Die Zuführbänder 2 erstrecken sich über die gesamte Länge des Speichertisches 3 und führen die Behälter dem gegenüberliegenden Ende des Speichertisches 3 zu. Dort werden die Behälter durch eine an dieser Stelle angeordnete Führung 5 in Richtung des seitlich angeordneten Auslaufs 4 geleitet. Besonders vorteilhaft können auch Ausgestaltungen sein, bei denen mehrere Einlauftransporteure1, mehrere Gruppen von Zuführbändern 2 und/oder mehrere Auslauftransporteure 4 angeordnet sind.

Neben den Zuführbändern 2 sind erfindungsgemäß einseitig Dosierbänder 6 angeordnet. Diese Dosierbänder 6 können aus einspurig oder aber auch mehrspurig angeordneten Förderbändern bekannter Bauart bestehen. Neben den Dosierbändern 6 wiederum können die bereits bekannten Speicherbänder 7 angeordnet sein. Auch diese können aus ein- oder mehrspurig angeordneten Förderbändern bestehen. Die bereits bekannten Speicherbänder 7 können auf der den Dosierbändern 6 gegenüberliegenden Seite der Zuführbänder 2 angeordnet sein.

Bei einem erfindungsgemäßem Speichertisch ist vorgesehen, dass bei Bereichen, welche im wesentlichen zur Speicherung von Behältern dienen sollen, neben dem Zuführband 2 ein Dosierband 6 und neben diesem ein Speicherband 7 angeordnet ist. In weiteren, besonders vorteilhaften Ausgestaltungen der vorliegenden Erfindung können auch beliebige andere Kombinationen aus Zuführ-, Dosier- und Pufferband vorgesehen sein. Zum Beispiel hat die Praxis gezeigt, das eine Anordnung von z.B. Zuführband 2, Dosierband 6 , Speicherband 7 , Dosierband 6 und Speicherband 7 im Hinblick auf die somit realisierte, deutlich vergrößerte Speicherfläche von besonderem Vorteil ist.

Gegenüber dem bekannten Stand der Technik, insbesondere gegenüber der WO 00/41955 unterscheidet sich die vorliegende Erfindung dadurch, dass vorgesehen ist, dass alle Bandarten jeweils mit einer eigenen Geschwindigkeit angetrieben werden und dass diese im Verhältnis zueinander entsprechend der Betriebsbedingungen variabel ist.

Durch diese Maßnahme und die Tatsache, dass die Geschwindigkeiten der einzelnen Bandarten in weiten Grenzen geregelt werden können, werden das Speicherverhalten und die Wirksamkeit des Speichertisches innerhalb der Gesamtanlage deutlich verbessert.

Der Antrieb 8 der Bänder kann anhand aller am Markt bekannten und verfügbaren Antriebskomponenten erfolgen. In Figur 1 sind diese Antriebe 8 nur symbolisch dargestellt. Als besonders zweckmäßig erweisen sich z.B. Servomotoren, frequenzgeregelte Drehstrommotoren usw.

Erfindungsgemäß ist vorgesehen, dass die Bandgeschwindigkeiten je nach Betriebszustand des Speichertisches bzw. der Gesamtanlage bestimmten Vorgaben folgen.

Zunächst ist diesbezüglich der Normalbetrieb, ohne gezielte Zu- oder Abnahme der auf dem Speichertisch befindlichen Behältermenge, darzustellen.
Bei diesem Betriebszustand bewegen sich die Zuführbänder 2 mit einer bestimmten, von der Gesamtanlage vorgegebenen Geschwindigkeit. Die Speicherbänder 7 bewegen sich vorzugsweise mit einer geringen Geschwindigkeit. Die Dosierbänder 6 bewegen sich mit einer Geschwindigkeit, die zwischen den Geschwindigkeiten der beiden anderen Bandarten liegt.

Den nächsten Betriebszustand stellt die Einspeicherung von Behältern dar. Dabei stauen sich die über die Zuführbänder 2 zugeführten Behälter zunächst im Bereich des Auslaufs 4. Mit zunehmendem Staudruck werden die Behälter dann zunächst auf die neben den Zuführbändern 2 angeordneten Dosierbänder 6 und Speicherbänder 7 übergeschoben, und anschließend, mit weiter steigendem Staudruck, von diesen Bändern weiter auf die wiederum neben diesen befindlichen Bänder unterschiedlichen Typs abgedrängt, wo die eigentliche Speicherung erfolgt.

Für den Betriebszustand "Speicherung" ist vorgesehen, dass die Zuführbänder 2 mit einer von der Gesamtanlage vorgegebenen Geschwindigkeit bewegt werden. Um ein möglichst großes Speichervolumen zu gewährleisten, hat es sich als zweckmäßig erwiesen, die Speicherbänder 7 nicht oder nur mit einer sehr geringen Geschwindigkeit zu bewegen. Die Geschwindigkeit der Dosierbänder 6 soll erfindungsgemäß zwischen den Geschwindigkeiten der beiden anderen Bandarten liegen.

Für den Betriebszustand "Entspeicherung" werden die nachfolgend dargestellten Bandgeschwindigkeiten empfohlen.

Auch bei der Entspeicherung wird die Geschwindigkeit der Zuführbänder 2 durch die Gesamtanlage vorgegeben. Speicherbänder 7 und Dosierbänder 6 werden mit einer Geschwindigkeit größer Null angetrieben, wobei beide Geschwindigkeiten in diesem Fall auch über der Geschwindigkeit der Zuführbänder 2 liegen können.

Im weiteren zweckmäßigen Ausgestaltungen der vorliegenden Erfindung können auch noch weitere Bandtypen vorgesehen sein. So bietet es sich z.B. an, einen weiteren Typ von Dosierbändern mit einer eigenen Geschwindigkeit vorzusehen, um dadurch die Regelungsmöglichkeiten eines derartigen Speichertisches noch weiter auszubauen, um die Gefäßbehandlung noch sanfter und schonender zu gestalten und um die Integration eines Speichertisches in die Gesamtanlage noch weiter zu verbessern.

Aber auch die Realisierung von Ausgestaltungen mit mehr als drei verschiedenen Bandtypen führt nicht dazu, dass der, durch die vorliegende Anmeldung offenbarte Pfad der technischen Lehre verlassen wird.

In Abhängigkeit von der Ausgestaltung der Gesamtanlage, den Eigenschaften des Behältermaterials und weiteren, an dieser Stelle nicht weiter behandelten Faktoren, können auch Bandgeschwindigkeiten bzw. Bandgeschwindigkeitskombinationen der einzelnen Bandtypen vorteilhaft sein, welche von den in den oben dargestellten Anwendungsfällen empfohlenen Geschwindigkeiten abweichen. Auch dieses führt nicht dazu, dass der Umfang der vorliegenden Erfindung verlassen wird.

Um erkennen zu können, welcher der zuvor dargestellten Betriebszustände des erfindungsgemäßen Speichertisches im Augenblick sinnvoller weise realisiert werden soll, aber auch um die jeweiligen Bandgeschwindigkeiten optimal einzustellen, sind am Speichertisch nicht dargestellte Sensoren vorgesehen, welche alle relevante Parameter wie z.B. Anzahl Behälter, Füllungsgrad des Speichertisches usw. erfassen und an eine ebenfalls nicht dargestellte Rechneranlage weiterleiten.
Innerhalb der Rechneranlage können diese Informationen ausgewertet und zur Ermittlung entsprechender Vorgabewerte für die einzelnen Bandgeschwindigkeiten verwendet werden.

## Patentansprüche

1. Niederdruck-Sammel- und Speichertisch für Gefäße und dergleichen, wobei vorgenannter Tisch folgende Merkmale umfasst:
Rahmen mit einem ersten Endstück des Rahmens, einem zweiten Endstück des Rahmens und zwei sich gegenüberliegenden Querseiten;
mindestens einem Einlauf an vorgenanntem ersten Endstück des Rahmens, mindestens einem Auslauf an vorgenanntem zweiten Ende des Rahmens, wobei der Auslauf auch seitlich angeordnet sein kann, wenigstens einem Zufuhrförderer, der am vorgenannten Rahmen so angebracht ist, dass er Produkte vom ersten Endstück zum zweiten Endstück des Befördert, mindestens drei verschiedene Bandtypen welche jeweils mit einer eigenen Geschwindigkeit antreibbar sind,
**dadurch gekennzeichnet, dass** die durch Sensoren erfassten Informationen an eine Rechneranlage weiterleitbar und innerhalb dieser zur Ermittlung von Steuerungsinformationen wie z.B. der optimalen Bandgeschwindigkeit verwendbar sind, wobei die Geschwindigkeit der Zuführbänder (2) durch die Steuerung der Gesamtanlage vorgegeben ist und dass die Geschwindigkeit der Zuführbänder (2) von Null bis zu einem Maximalwert stufenlos einstellbar ist.

2. Niederdruck-Sammel und -Speichertisch nach Anspruch 1, **dadurch gekennzeichnet, dass** es sich bei den Bandtypen mindestens um Zuführbänder (2), Dosierbänder (6) und Speicherbänder (7) handelt.

3. Niederdruck-Sammel und -Speichertisch nach einem oder mehreren der Ansprüche 1 bis 3, **dadurch gekennzeichnet, dass** die Geschwindigkeit der Speicherbänder von Null bis zu einer Geschwindigkeit, welche über der Geschwindigkeit der Zuführbänder (2) liegt, einstellbar ist.

4. Niederdruck-Sammel und -Speichertisch nach einem oder mehreren der Ansprüche 1 bis 4, **dadurch gekennzeichnet, dass** die Geschwindigkeit der Dosierbänder (6) von Null bis zu einer Geschwindigkeit, welche über der Geschwindigkeit der Zuführbänder (2) liegt, einstellbar ist.

5. Niederdruck-Sammel und -Speichertisch nach einem oder mehreren der Ansprüche 1 bis 5, **dadurch gekennzeichnet, dass** an diesem Sensoren zur Erfassung von, für die Steuerung des Tisches relevanter Informationen vorgesehen sind.

6. Niederdruck-Sammel und -Speichertisch nach einem oder mehreren der Ansprüche 1 bis 6, **dadurch gekennzeichnet, dass** die durch Sensoren erfassten Informationen an eine Rechneranlage weiterleitbar und innerhalb dieser zur Ermittlung von Steuerungsinformationen wie z.B. der optimalen Bandgeschwindigkeiten verwendbar sind.

## Claims

1. Low pressure collection and storage table for containers and the like, wherein the aforementioned table includes the following features: frame with a first end piece of the frame, a second end piece of the frame and two oppositely situated transverse sides; at least one inlet at the aforementioned first end piece of the frame, at least one outlet at the aforementioned second end of the frame, wherein the outlet can also be disposed laterally, at least one feeding conveyor, which is mounted on the aforementioned frame such that it conveys products from the first end piece to the second end piece, at least three different types of conveyors, each of which is driveable at its own speed, **characterised in that** the information collected by sensors can be forwarded to a computer system and is useable internally of said computer system to determine control data such as, for example, the optimum belt speed, wherein the speed of the feeding belts (2) is predetermined by the control of the overall system and **in that** the speed of the feeding belts (2) is steplessly adjustable from zero up to a maximum value.

2. Low pressure collection and storage table in accordance with claim 1, **characterised in that** the belt types are at least feeding belts (2), dosing belts (6) and storage belts (7).

3. Low pressure collection and storage table in accordance with one or more of claims 1 to 3, **characterised in that** the speed of the storage belts is adjustable from zero up to a speed that is in excess of the speed of the feeding belts (2).

4. Low pressure collection and storage table in accordance with one or more of claims 1 to 4, **characterised in that** the speed of the dosing belts (6) is from zero up to a speed that is in excess of the speed of the feeding belts (2).

5. Low pressure collection and storage table in accordance with one or more of the claims 1 to 5, **characterised in that** sensors are provided on the said table for the collection of information relevant to the control of the table.

6. Low pressure collection and storage table in accordance with one or more of claims 1 to 6, **characterised in that** the information collected by sensors can be forwarded to the computer system and can be used intemally of said computer system to determine control data such as, for example, the optimum belt speeds.

## Revendications

1. Plateau collecteur et accumulateur basse pression de conteneurs et similaires, le plateau précédemment cité comportant les caractéristiques suivantes :
cadre avec une première partie d'extrémité du cadre, une deuxième partie d'extrémité du cadre et deux côtés transversaux opposés ; au moins une entrée sur la première partie d'extrémité du cadre précédemment citée, au moins une sortie sur la deuxième partie d'extrémité du cadre précédemment citée, la sortie pouvant également être disposée latéralement, au moins un transporteur d'alimentation qui est monté sur le cadre précédemment cité, de façon à transporter des produits de la première partie d'extrémité vers la deuxième partie d'extrémité, avec au moins trois différents types de bandes pouvant être respectivement entraînées à leur propre vitesse,
**caractérisé en ce que** les informations détectées par des capteurs peuvent être transmises à un système d'ordinateur et utilisées dans ce dernier pour déterminer des informations de commande, comme par exemple la vitesse optimale des bandes, la vitesse des bandes d'alimentation (2) étant prédéfinie par la commande de l'ensemble de l'installation et **en ce que** la vitesse des bandes d'alimentation (2) est réglable de façon continue de zéro jusqu'à une valeur maximale.

2. Plateau collecteur et accumulateur basse pression selon la revendication 1, **caractérisé en ce que** les types de bandes sont au moins des bandes d'alimentation (2), des bandes de dosage (6) et des bandes d'accumulation (7).

3. Plateau collecteur et accumulateur basse pression selon l'une quelconque ou plusieurs des revendications 1 à 2, **caractérisé en ce que** la vitesse des bandes d'accumulation est réglable de zéro jusqu'à une vitesse qui est supérieure à la vitesse des bandes d'alimentation (2).

4. Plateau collecteur et accumulateur basse pression selon l'une quelconque ou plusieurs des revendications 1 à 3, **caractérisé en ce que** la vitesse des bandes de dosage (6) est réglable de zéro jusqu'à une vitesse qui est supérieure à la vitesse des bandes d'alimentation (2).

5. Plateau collecteur et accumulateur basse pression selon l'une quelconque ou plusieurs des revendications 1 à 4, **caractérisé en ce que** sont prévus sur ce dernier des capteurs pour détecter des informations déterminantes pour la commande du plateau.

6. Plateau collecteur et accumulateur basse pression selon l'une quelconque ou plusieurs des revendications 1 à 5, **caractérisé en ce que** les informations détectées par les capteurs peuvent être transmises à un système d'ordinateur et utilisées dans ce dernier pour déterminer les informations de commande comme par exemple la vitesse optimale des bandes.
